(19) Europäisches Patentamt / European Patent Office / Office européen des brevets

(11) **EP 3 230 767 B1**

(12) **FASCICULE DE BREVET EUROPEEN**

(45) Date de publication et mention
de la délivrance du brevet:
**01.08.2018 Bulletin 2018/31**

(21) Numéro de dépôt: **15823344.5**

(22) Date de dépôt: **09.12.2015**

(51) Int Cl.:
*G01S 19/23* (2010.01)    *G01S 19/26* (2010.01)
*G01S 19/20* (2010.01)    *G01S 19/42* (2010.01)
*G01S 19/49* (2010.01)    *G01S 19/52* (2010.01)

(86) Numéro de dépôt international:
**PCT/FR2015/000223**

(87) Numéro de publication internationale:
**WO 2016/092160 (16.06.2016 Gazette 2016/24)**

(54) **DISPOSITIF REDONDANT DE CAPTEURS DE PILOTAGE POUR UN AÉRONEF À VOILURE TOURNANTE**

REDUNDANTE VORRICHTUNG ZUR ANSTEUERUNG VON SENSOREN FÜR EINEN DREHFLÜGLER

REDUNDANT DEVICE OF PILOTING SENSORS FOR A ROTARY-WING AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2014 FR 1402824**

(43) Date de publication de la demande:
**18.10.2017 Bulletin 2017/42**

(73) Titulaire: **Airbus Helicopters
13725 Marignane Cedex (FR)**

(72) Inventeur: **PETILLON, Jean-Paul
F-13140 Miramas (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
**FR-A1- 2 964 468        FR-A1- 2 996 647
US-A1- 2011 060 483        US-B2- 7 436 354**

**Description**

Le domaine général de la présente invention est celui des aides au pilotage des aéronefs, et des aéronefs à voilures tournantes en particulier.

La présente invention concerne un dispositif redondant de capteurs de pilotage basé sur au moins deux systèmes de navigation par satellites pour un aéronef déterminant la vitesse par rapport au sol de cet aéronef, ainsi qu'un procédé de détermination de cette vitesse par rapport au sol de l'aéronef.

Un tel système de navigation par satellites comprend un récepteur embarqué, qui reçoit des signaux de plusieurs satellites appartenant à une constellation de satellites, cette constellation étant contrôlée par une infrastructure terrestre fixe dite segment sol. L'ensemble constitué du récepteur, de la constellation et du segment sol constitue un système de navigation par satellites, généralement désigné par l'acronyme GNSS signifiant en langue anglaise « Global Navigation Satellite System ». Plusieurs systèmes GNSS sont actuellement opérationnels, tels que le système GPS (« *Global Positioning System* ») des États-Unis d'Amérique et le système GLONASS de la Russie. Les systèmes BEIDOU Chinois, le système japonais QZSS et le système GALILEO Européen sont actuellement en cours de développement ou de déploiement.

Une limitation générale à l'utilisation des systèmes GNSS dans les systèmes de pilotage des aéronefs réside dans la possibilité de pannes multiples affectant simultanément plusieurs satellites, voire même une constellation complète.

La présente invention met à profit la disponibilité de plusieurs systèmes GNSS indépendants pour outrepasser cette limitation.

Le document US7436354 décrit un dispositif de navigation par satellites utilisant simultanément plusieurs constellations GNSS. Un tel dispositif opère par traitement de mesures de position issues de systèmes GNSS distincts, permettant de détecter des pannes simples et des pannes multiples et de surpasser le niveau d'intégrité des récepteurs basés sur une seule constellation et utilisant des méthodes de contrôle autonome de l'intégrité de ces mesures, de telles méthodes étant connues sous l'acronyme RAIM (Receiver Autonomous Integrity Monitoring). Un tel dispositif ne met toutefois pas en oeuvre de méthodes RAIM individuels sur chacun des systèmes GNSS et ne permet pas d'atteindre le niveau d'intégrité requis pour des applications critiques. De plus, ce dispositif ne garantit pas une continuité des informations de navigation, notamment en cas de pertes des signaux provenant des satellites dues par exemple à l'environnement. Enfin, ces informations de navigation comportent la position de l'aéronef mais pas sa vitesse.

Il est en outre connu que les systèmes GNSS, bien que conçus pour permettre de déterminer la position de divers véhicules, permettent aussi de déterminer leur vitesse. D'autres technologies permettent également d'estimer la position et la vitesse d'un aéronef, sans utiliser de satellites.

De tels dispositifs et notamment des centrales inertielles IRS peuvent être combinés avec l'utilisation d'un récepteur GNSS afin de limiter les effets des perturbations subies par les systèmes GNSS. Notamment, la vitesse sol obtenue par l'intermédiaire d'une centrale inertielle permet de valider la vitesse sol fournie par un récepteur GNSS lorsque ces deux vitesses sol sont proches. De plus, en cas de défaillance du système GNSS consécutif à la panne d'un satellite ou bien à un masquage par exemple, la centrale inertielle est capable de suppléer le récepteur GNSS pour une durée limitée, et permettre d'estimer la vitesse sol de l'aéronef.

On connait par exemple le document FR2906893 qui décrit un système hybride comportant au moins deux récepteurs GNSS, au moins un module inertiel IMU permettant d'hybrider les informations fournies par au moins un récepteur GNSS et au moins un filtre Kalman étendu. Ce système hybride permet de détecter une défaillance sur au moins un satellite du système GNSS. Ce système hybride permet également de déterminer un rayon de protection correspondant à une erreur sur la position fournie par ce système hybride.

Les informations fournies par un tel dispositif hybridé sont précises. Par contre, ce dispositif hybridé est dépendant d'un seul système GNSS, tel que le système GPS par exemple. De ce fait, les informations fournies ne sont pas suffisamment intègres. De plus, un tel dispositif hybridé doit comporter un nombre important d'estimateurs afin de gérer notamment les pannes doubles de satellites. En effet, ce dispositif est basé sur des tests d'hypothèses. Le nombre d'estimateurs correspond donc au nombre de configurations de pannes, selon ces hypothèses, que peut détecter ce dispositif. Par exemple, un dispositif dimensionné pour détecter toutes les combinaisons de pannes de deux satellites parmi vingt quatre satellites de deux constellations GNSS doit comporter un nombre d'estimateurs égal à $C_{24}^2 = 276$. L'introduction d'une troisième constellation GNSS porte le nombre d'estimateurs nécessaires à $C_{36}^2 = 630$. Cette augmentation du nombre d'estimateurs se traduit alors par un coût important et une impossibilité d'un tel système à évoluer avec l'avènement de nouvelles constellations.

On connait également le document FR2964468 qui décrit un dispositif de détection et d'exclusion de pannes multiples de satellites pour un système multi-GNSS utilisant simultanément plusieurs constellations. Ce dispositif comporte un banc de filtres de Kalman muni d'au moins un filtre par satellite utilisé permettant d'exclure les informations fournies par un satellite jugé défaillant. De plus, ce dispositif peut être hybridé par un module inertiel IMU. De même que précédemment, la puissance de calcul de ce banc de filtres de Kalman croît très vite avec le nombre de satellites traités et le nombre de combinaisons de pannes satellites envisagées.

Le document US2011/060483 décrit aussi un dispositif d'aide à la navigation d'un aéronef utilisant trois canaux différents pour déterminer la position de l'aéronef. Chaque canal peut utiliser un système GNSS ou bien un système GNSS hybridé par des mesures inertiels.

Le document FR2996647 décrit une centrale inertielle reliée à un récepteur utilisant des mesures issues de plusieurs satellites répartis en au moins deux sous-ensembles distincts de satellites afin de déterminer au moins deux solutions hybrides de navigation. Cette centrale inertielle comporte un détecteur de panne satellites, muni d'un filtre de kalman principal et de plusieurs filtres de Kalman secondaires, comparant en aval des filtres de Kalman ces solutions hybrides de navigation afin de détecter une panne d'un satellite et d'exclure le satellite en panne.

L'utilisation d'un filtre de kalman principal et des filtres de Kalman secondaires ainsi que son application à un dispositif de navigation utilisant une centrale inertielle et un récepteur GPS sont notamment décrites dans le document « A New Failure Détection Approach and Its Application to GPS Autonomous Integrity Monitoring » - IEEE Transactions on Aerospace and Electronic Systems - Vol 31, N°1 - Janvier 1995 - pages 499-506.

La présente invention a pour objet de proposer un dispositif de capteurs de pilotage pour un aéronef permettant de s'affranchir des limitations mentionnées ci-dessus, ce dispositif de capteurs de pilotage étant capable de fournir une vitesse sol de l'aéronef qui atteint les niveaux d'intégrité, de disponibilité et de précision requis par un système de pilotage, permettant la réalisation de vols sûrs près du sol et des obstacles. Ce dispositif de capteurs de pilotage est plus particulièrement destiné à un aéronef à voilure tournante.

Selon un aspect de l'invention, un dispositif de capteurs de pilotage destiné à un aéronef à voilure tournante comporte des moyens de réception GNSS de constellations d'au moins deux systèmes GNSS indépendants et distincts ainsi qu'au moins un module de détection et d'exclusion de pannes FDE. Chaque moyen de réception GNSS est relié à au moins une antenne et reçoit des signaux initiaux de navigation de plusieurs satellites. Chaque module de détection et d'exclusion de pannes FDE reçoit au moins deux signaux d'entrées et délivre un signal de sortie, chaque signal de sortie comportant une mesure et un état d'intégrité.

Selon un mode de réalisation, le dispositif de capteurs de pilotage selon l'invention comporte au moins deux moyens de réception GNSS et peut ainsi utiliser au moins deux systèmes GNSS distincts. De préférence, le dispositif de capteurs de pilotage selon l'invention comporte des moyens de réception GNSS distincts et non similaires pour traiter séparément les signaux initiaux de navigation provenant de satellites appartenant à chaque système GNSS. Chaque moyen de réception GNSS est ainsi dédié à un système GNSS spécifique tels que par exemple le système GPS, le système GLONASS, le système GALILEO, le système QZSS et les systèmes BEIDOU. De fait, le dispositif de capteurs de pilotage selon l'invention est redondant à la fois au niveau des systèmes GNSS et au niveau des moyens de réception GNSS, et peut ainsi pallier des défaillances d'un de ces systèmes GNSS ou de l'un des moyens de réception.

Selon un autre mode de réalisation de l'invention, chaque moyen de réception GNSS est une sous-fonction d'un unique récepteur multi-GNSS, c'est-à-dire capable d'utiliser des signaux de navigation provenant de satellites appartenant à différents systèmes GNSS mais fournissant des solutions distinctes pour chaque constellation.

Selon encore un autre mode de réalisation, le dispositif de capteurs de pilotage selon l'invention peut utiliser, en lieu et place d'un système GNSS, un système de télécommunication par satellites tel que le système IRIDIUM qui utilise sa propre constellation de satellites. Les éphémérides de ces satellites étant connues, il est possible d'exploiter l'effet Doppler sur les signaux qu'ils émettent afin de déterminer la vitesse sol d'un véhicule. Cette utilisation du système IRIDIUM est possible car le dispositif de capteurs de pilotage selon l'invention vise à déterminer la vitesse sol d'un aéronef plutôt que sa position.

Ce dispositif de capteurs de pilotage selon l'invention est remarquable en ce que chaque moyen de réception GNSS comporte un premier module de détection et d'exclusion de pannes FDE1 et que le dispositif de capteurs de pilotage comporte au moins un second module de détection et d'exclusion de pannes FDE2.

Chaque premier module de détection et d'exclusion de pannes FDE1 reçoit et analyse les signaux initiaux et détecte des signaux initiaux intègres et/ou des signaux initiaux erronés. Un exemple de réalisation de ce traitement est connu sous l'appellation RAIM, décrit par exemple dans le document FR2971857.

Cette méthode RAIM destinée initialement à la consolidation de mesures de position est nommée V-RAIM dans la suite du présent document lorsqu'elle est appliquée à la détermination d'une vitesse sol d'un aéronef.

Chaque moyen de réception GNSS délivre alors une mesure et un état d'intégrité d'un premier signal de vitesse sol de l'aéronef en repère géographique à partir des signaux initiaux intègres en excluant le cas échéant lesdits signaux initiaux erronés.

La disponibilité d'un premier signal de vitesse sol est dépendante du nombre de satellites du système GNSS visibles par le moyen de réception GNSS ou bien en fonctionnement correct.

Par exemple, quatre satellites sont généralement nécessaires pour déterminer une position tridimensionnelle ainsi qu'un décalage de temps de l'horloge du récepteur, ou bien une vitesse tridimensionnelle d'un aéronef ainsi qu'un décalage de fréquence de l'horloge du récepteur. Cependant, au moins un cinquième satellite est nécessaire pour avoir une redondance et détecter ainsi la présence d'une panne simple d'un satellite. De fait, chaque premier module de détection et d'exclusion de pannes FDE1 reçoit au moins quatre signaux initiaux pour déterminer un premier signal de vitesse sol et au moins cinq signaux initiaux pour garantir l'intégrité de ce premier signal de vitesse sol.

Avantageusement, chaque moyen de réception GNSS peut comporter une horloge de grande précision, telle qu'une horloge atomique, utilisée comme référence de fréquence. Chaque premier module de détection et d'exclusion de pannes FDE1 nécessite alors un signal initial de moins pour déterminer un premier signal de vitesse sol de l'aéronef. De la sorte, un tel moyen de réception GNSS comportant une horloge atomique permet de déterminer un premier signal de vitesse sol dès que trois satellites sont visibles et de détecter une panne simple d'un satellite à partir de quatre satellites visibles.

De fait, chaque moyen de réception GNSS peut délivrer une mesure de vitesse sol garantie pour un premier niveau d'intégrité, grâce à un premier niveau de surveillance autonome. Ce premier niveau d'intégrité ne couvre que les pannes simples d'un satellite de la constellation de ce moyen de réception GNSS.

Chaque second module de détection et d'exclusion de pannes FDE2 est relié et est en communication avec au moins deux moyens de réception GNSS. Chaque second module de détection et d'exclusion de pannes FDE2 reçoit, analyse et compare les premiers signaux de vitesse sol délivrés par au moins deux moyens de réception GNSS, puis détecte des premiers signaux de vitesse sol intègres et/ou des premiers signaux de vitesse sol erronés. Chaque second module de détection et d'exclusion de pannes FDE2 peut alors détecter et éventuellement exclure chaque système GNSS défectueux en localisant un premier signal de vitesse sol erroné, puis déterminer et délivrer une mesure et un état d'intégrité d'un deuxième signal de vitesse sol de l'aéronef à partir d'au moins deux premiers signaux de vitesse sol intègres en excluant le cas échéant les premiers signaux de vitesse sol erronés.

Le second module de détection et d'exclusion de pannes FDE2 recevant les premiers signaux de vitesses sol permet de détecter les pannes multiples, affectant plusieurs satellites simultanément, ainsi que celles affectant le segment sol d'un système GNSS. En effet, en comparant les premiers signaux de vitesse sol émis par au moins deux moyens de réception GNSS couvrant au moins deux systèmes GNSS distincts et indépendants, chaque second module de détection et d'exclusion de pannes FDE2 peut détecter des incohérences entre ces premiers signaux de vitesse sol et, a minima, passiver la panne.

On entend par « passiver une panne » rendre cette panne passive, c'est-à-dire sans conséquence catastrophique ou dangereuse sur le dispositif.

Si au moins trois systèmes GNSS et trois moyens de réception étaient initialement disponibles, chaque second module de détection et d'exclusion de pannes FDE2 peut détecter des incohérences entre ces premiers signaux de vitesse sol, identifier le système GNSS émettant les premiers signaux de vitesse sol erronés et exclure ce système GNSS. Le dispositif selon l'invention permet ainsi de localiser le système GNSS défectueux, de l'exclure, et de continuer à fonctionner avec les systèmes GNSS valides.

De façon générale, un module de détection et d'exclusion de pannes FDE recevant uniquement deux signaux d'entrées ne peut que détecter des incohérences entre ces signaux d'entrées, sans identifier, ni localiser le signal d'entrées erroné. Ce module de détection et d'exclusion de pannes FDE ne peut donc pas exclure le seul composant fournissant ces signaux d'entrées erronés. Ce module de détection et d'exclusion de pannes FDE exclut alors les deux signaux d'entrées. En conséquence, aucun signal de sortie valide n'est fourni par un module de détection et d'exclusion de pannes FDE dès qu'il détecte une incohérence entre ces signaux d'entrées.

Par contre, un module de détection et d'exclusion de pannes FDE recevant au moins trois signaux d'entrées peut détecter des incohérences entre ces signaux d'entrées, puis identifier et localiser au moins un signal d'entrées erroné. Ce module de détection et d'exclusion de pannes FDE peut alors exclure chaque composant fournissant un signal d'entrées erroné et fournir un signal de sortie valide à partir des signaux d'entrées intègres. De fait, un module de détection et d'exclusion de pannes FDE recevant au moins trois signaux d'entrées permet de détecter et d'exclure un composant en panne tout en continuant de fournir un signal de sortie valide.

Le second module de détection et d'exclusion de pannes FDE2 peut opérer selon la méthode connue de la médiane.

Une telle méthode est par exemple décrite dans le document US4264955. Selon ce document, on calcule la valeur médiane des signaux d'entrée. Cette valeur médiane est garantie intègre tant que le nombre de premiers signaux de vitesse sol erronés est inférieur à la moitié du nombre total de premiers signaux de vitesse sol disponibles en entrée du second module de détection et d'exclusion de pannes FDE2.

En outre, ladite valeur médiane peut être utilisée comme référence pour comparer chacune des valeurs des autres signaux d'entrée. Les signaux d'entrée s'écartant de la référence, en valeur absolue, de plus d'un seuil prédéterminé sont alors considérés comme défectueux.

Dans les cas où le second module de détection et d'exclusion de pannes FDE2 ne dispose plus à ses entrées que de deux signaux valides, un écart excessif entre ces deux signaux révèle une panne affectant l'un des deux. Faute de pouvoir localiser ladite panne, le second module de détection et d'exclusion de pannes FDE2 passive la panne en invalidant sa sortie.

Enfin, lorsque le second module de détection et d'exclusion de pannes FDE2 reçoit un seul premier signal de vitesse sol valide, aucun deuxième signal de vitesse sol intègre n'est fourni, l'intégrité de ce premier signal de vitesse sol ne pouvant être déterminée.

Par exemple, le seuil de cohérence prédéterminé est égal à 0.2 mètre par seconde (0.2m/s).

Le dispositif de capteurs selon l'invention permet ainsi de déterminer un signal de vitesse sol de l'aéronef suffisamment intègre pour être utilisé dans un système de pilotage. En effet, l'intégrité de ce deuxième signal de vitesse sol de l'aéronef résulte de la mise en cascade de premiers modules et d'un second module de détection et d'exclusion de pannes FDE1 et FDE2, le deuxième étage FDE2 détectant les pannes qui ne l'ont pas été par les seuls premiers étages FDE1.

De plus, ce deuxième signal de vitesse sol est très disponible dès lors qu'il est déterminé à partir de plus de deux systèmes GNSS distincts et indépendants. Il est en effet très peu probable que des pannes multiples affectent simultanément plusieurs systèmes GNSS indépendants.

En outre, chaque moyen de réception GNSS peut avantageusement être relié à au moins deux antennes de réception. Ainsi, chaque moyen de réception GNSS peut déterminer comme décrit par exemple dans le document FR2964199, les directions d'arrivée des signaux initiaux provenant des satellites, les comparer aux directions attendues et rejeter ceux desdits signaux initiaux pour lesquels une discordance est constatée.

Dans le mode préféré de réalisation de l'invention, la disponibilité d'une solution de vitesse sol intègre pour les lois de pilotage est améliorée par la mise en oeuvre de mesures inertielles. Dans ce mode de réalisation, le dispositif de capteurs de pilotage selon l'invention comporte en outre au moins un module inertiel IMU et au moins une plateforme d'hybridation. Chaque module inertiel IMU fournit des signaux de mesures inertielles caractérisant des accélérations et des vitesses angulaires de l'aéronef. Il est alors connu d'estimer par intégration de ces signaux de mesures inertielles d'accélérations et de vitesses angulaires une vitesse sol inertielle de cet aéronef. Chaque plateforme d'hybridation est reliée et en est communication avec un module inertiel IMU et un second module de détection et d'exclusion de pannes FDE2. La plateforme d'hybridation et le module inertiel IMU forme une chaîne inertielle.

Chaque plateforme d'hybridation reçoit et traite ces signaux de mesures inertielles ainsi qu'éventuellement un deuxième signal de vitesse sol, constituant une vitesse d'aide, et détermine une mesure constituant un troisième signal de vitesse sol de l'aéronef.

De manière connue, une plateforme d'hybridation aidée vitesse réalise les opérations suivantes :

- intégration des mesures inertielles pour obtenir une estimation de vitesse hybride,

- calcul de l'écart entre ladite estimation de vitesse hybride et la vitesse d'aide,

- estimation de corrections des mesures inertielles à partir dudit écart.

Dans les phases de vol où la vitesse d'aide n'est pas disponible, la vitesse obtenue est purement inertielle, mais bénéficie des dernières corrections estimées.

Le troisième signal de vitesse sol est ainsi disponible de façon continue, y compris quand le deuxième signal de vitesse sol n'est pas disponible.

De préférence, le dispositif de capteurs de pilotage selon l'invention comporte au moins deux plateformes d'hybridation et au moins deux modules inertiels IMU.

De plus, le dispositif de capteurs de pilotage selon l'invention peut comporter au moins un troisième module de détection et d'exclusion de pannes FDE3. Chaque troisième module de détection et d'exclusion de pannes FDE3 est relié et est en communication avec au moins deux plateformes d'hybridation. Chaque troisième module de détection et d'exclusion de pannes FDE3 reçoit, analyse et compare les troisièmes signaux de vitesse sol délivrés par les plateformes d'hybridation et détecte des troisièmes signaux de vitesse sol intègres et/ou des troisièmes signaux de vitesse sol erronés.

Chaque troisième module de détection et d'exclusion de pannes FDE3 peut alors détecter une panne sur une chaîne inertielle et à minima passiver cette panne. Dans les modes de réalisation où le dispositif de capteurs de pilotage comprend plus de deux chaînes inertielles, le troisième module de détection et d'exclusion de pannes FDE3 peut en outre localiser la chaîne inertielle défectueuse et l'exclure.

Chaque troisième module de détection et d'exclusion de pannes FDE3 peut ainsi déterminer et délivrer une mesure et un état d'intégrité d'un quatrième signal de vitesse sol de l'aéronef à partir d'au moins deux troisièmes signaux de vitesse sol intègres en excluant le cas échéant les troisièmes signaux de vitesse sol erronés.

Chaque troisième module de détection et d'exclusion de pannes FDE3 peut mettre en oeuvre la méthode de la médiane pour détecter et éventuellement localiser et exclure les troisièmes signaux de vitesse sol défectueux.

Le troisième module de détection et d'exclusion de pannes FDE3 peut en outre être relié et être en communication avec au moins un second module de détection et d'exclusion de pannes FDE2 afin de recevoir, d'analyser et de comparer au moins un deuxième signal de vitesse sol et les troisièmes signaux de vitesse sol. Chaque troisième module de détection et d'exclusion de pannes FDE3 peut alors détecter et localiser des deuxièmes et/ou des troisièmes signaux de vitesse sol intègres ainsi que des deuxièmes et/ou des troisièmes signaux de vitesse sol erronés.

Chaque troisième module de détection et d'exclusion de pannes FDE3 peut ensuite déterminer et délivrer une mesure et un état d'intégrité du quatrième signal de vitesse sol de l'aéronef à partir d'au moins un deuxième signal de vitesse sol intègre et/ou d'au moins deux troisièmes signaux de vitesse sol intègres en excluant le cas échéant les deuxièmes et/ou troisièmes signaux de vitesse sol erronés.

Chaque troisième module de détection et d'exclusion de pannes FDE3 peut ainsi localiser la panne détectée qui peut être soit une panne d'une chaîne inertielle, soit une panne commune aux systèmes GNSS. Chaque troisième module de détection et d'exclusion de pannes FDE3 peut ensuite exclure la chaîne inertielle défectueuse ou bien les systèmes GNSS à partir de la localisation des deuxièmes et troisièmes signaux de vitesse sol erronés.

Le troisième module de détection et d'exclusion de pannes FDE3 délivre le quatrième signal de vitesse sol en appliquant par exemple la méthode de détermination selon la valeur médiane.

Par ailleurs, l'utilisation d'au moins une chaîne inertielle permet ainsi d'assurer la continuité de la fourniture du troisième signal de vitesse sol et, par suite, du quatrième signal de vitesse sol de l'aéronef en cas d'indisponibilité d'un deuxième signal de vitesse sol intègre.

Avantageusement, l'utilisation de plusieurs chaînes inertielles dans le dispositif de capteurs de pilotage permet de passiver les défauts simultanés et cohérents de tous les systèmes GNSS. Une telle situation est quasiment impossible si les défauts considérés sont des pannes involontaires. Par contre, une tentative malveillante d'un individu ou d'une organisation de falsifier tous les signaux GNSS reçus par l'aéronef n'est pas à exclure. Ainsi, dans de telles situations, un dispositif conforme à l'invention rejette l'ensemble des deuxièmes signaux de vitesse sol et continue à délivrer un quatrième signal de vitesse sol intègre, purement inertiel.

Selon un mode de réalisation particulier de l'invention, chaque plateforme d'hybridation comporte une plateforme virtuelle purement inertielle et un filtre aux erreurs d'hybridation communiquant entre eux. Chaque plateforme virtuelle purement inertielle est reliée et en communication avec un module inertiel IMU formant ainsi une centrale inertielle.

Le dispositif de capteurs de pilotage comporte alors deux centrales inertielles, un calculateur à deux voies de calcul, et deux filtres aux erreurs d'hybridation par centrale inertielle, un dans chaque voie de calcul. Chaque voie de calcul calcule deux filtres aux erreurs d'hybridation avec d'une part un second module de détection et d'exclusion de pannes FDE2 et d'autre part un troisième module de détection et d'exclusion de pannes FDE3. Chaque second module de détection et d'exclusion de pannes FDE2 est relié et en communication avec deux filtres aux erreurs d'hybridation et chaque troisième module de détection et d'exclusion de pannes FDE3 est en communication avec deux filtres aux erreurs d'hybridation pour chaque voie de calcul. L'utilisation de ces deux voies de calcul en parallèle permet de détecter et de passiver un éventuel dysfonctionnement d'une de ces voies de calcul.

Chaque plateforme virtuelle purement inertielle reçoit des signaux de mesures inertielles d'un module inertiel IMU que cette plateforme virtuelle purement inertielle transforme en vitesse sol inertielle pure. De fait, chaque centrale inertielle délivre une vitesse sol inertielle pure de l'aéronef. Chaque filtre aux erreurs d'hybridation est alors relié à une centrale inertielle ainsi qu'à un second module de détection et d'exclusion de pannes FDE2 pour recevoir une vitesse sol inertielle pure de l'aéronef et un deuxième signal de vitesse sol de l'aéronef.

En outre, chaque filtre aux erreurs d'hybridation est de préférence un filtre de Kalman qui estime les erreurs affectant les variables d'état plutôt que directement les variables d'état.

La présente invention a aussi pour objet un procédé de détermination d'une vitesse sol d'un aéronef comportant plusieurs étapes.

Au cours d'une première étape, on reçoit des signaux initiaux de navigation provenant de plusieurs satellites appartenant à au moins deux systèmes GNSS distincts et indépendants.

Au cours d'une seconde étape, on analyse ces signaux initiaux de navigation pour chaque système GNSS.

Au cours d'une troisième étape, on détecte des signaux initiaux intègres et/ou des signaux initiaux erronés.

Au cours d'une quatrième étape, on délivre une mesure et un état d'intégrité d'au moins deux premiers signaux de vitesse sol de l'aéronef en repère géographique pour au moins deux systèmes GNSS distincts et indépendants à partir des signaux initiaux intègres en excluant le cas échéant les signaux initiaux erronés.

Au cours d'une cinquième étape, on analyse et on compare les premiers signaux de vitesse sol.

Au cours d'une sixième étape, on détecte des premiers signaux de vitesse sol intègres et/ou des premiers signaux de vitesse sol erronés.

Au cours d'une septième étape, on détecte et on exclut chaque système GNSS défectueux fournissant un premier signal de vitesse sol erroné.

Au cours d'une huitième étape, on détermine et on délivre une mesure et un état d'intégrité d'au moins un deuxième signal de vitesse sol de l'aéronef à partir d'au moins deux premiers signaux de vitesse sol intègres en excluant le cas échéant lesdits premiers signaux de vitesse sol erronés.

Au cours de la huitième étape, on peut déterminer au moins un deuxième signal de vitesse sol de l'aéronef si au moins deux premiers signaux de vitesse sol sont disponibles. Chaque deuxième signal de vitesse sol de l'aéronef est déterminé par une méthode de la médiane.

Le procédé de détermination d'une vitesse sol d'un aéronef permet ainsi de détecter une panne simple d'un satellite d'un système GNSS et/ou une panne multiple au sein d'un ou plusieurs systèmes GNSS. Le deuxième signal de vitesse sol de l'aéronef reste donc disponible et intègre malgré des pannes multiples.

Selon une première variante de ce mode de réalisation de l'invention, ce procédé peut comporter des étapes supplémentaires.

Au cours d'une neuvième étape, on acquiert des signaux de mesures inertielles, les signaux de mesures inertielles caractérisant des accélérations et des vitesses angulaires de l'aéronef.

Au cours d'une dixième étape, on traite chaque deuxième signal de vitesse sol et les signaux de mesures inertielles.

Au cours d'une onzième étape, on détermine et on délivre au moins une mesure constituant au moins un troisième signal de vitesse sol de l'aéronef à partir des signaux de mesures inertielles et le cas échéant d'un deuxième signal de vitesse sol intègre, le troisième signal de vitesse sol étant alors disponible de façon continue.

Au cours de cette onzième étape, chaque troisième signal de vitesse sol peut être déterminé selon une méthode d'hybridation connue et utilisée classiquement dans le domaine aéronautique. Une telle méthode d'hybridation permet de délivrer un troisième signal de vitesse sol hybride.

Au cours d'une douzième étape, on analyse et on compare les troisièmes signaux de vitesse sol.

Ensuite, au cours d'une treizième étape, on détecte des troisièmes signaux de vitesse sol intègres et/ou des troisièmes signaux de vitesse sol erronés.

Au cours d'une quatorzième étape, on détermine et on délivre une mesure et un état d'intégrité d'un quatrième signal de vitesse sol de l'aéronef à partir d'au moins deux troisièmes signaux de vitesse sol intègres en excluant le cas échéant lesdits troisièmes signaux de vitesse sol erronés. Ce quatrième signal de vitesse sol peut être déterminé par la méthode de la médiane.

Selon une seconde variante de ce mode de réalisation de l'invention, ces étapes supplémentaires se déroulent comme suit, les neuvième, dixième et onzième étapes étant identiques au premier mode de réalisation.

Au cours de la douzième étape, on analyse et on compare au moins un deuxième signal de vitesse sol et les troisièmes signaux de vitesse sol.

Au cours de la treizième étape, on détecte et on localise des deuxièmes signaux de vitesse sol intègres et/ou des troisièmes signaux de vitesse sol intègres ainsi que des deuxièmes signaux de vitesse sol erronés et/ou des troisièmes signaux de vitesse sol erronés.

Au cours de la quatorzième étape, on détermine et on délivre une mesure et un état d'intégrité du quatrième signal de vitesse sol de l'aéronef à partir d'au moins un deuxième signal de vitesse sol intègre et/ou d'au moins deux troisièmes signaux de vitesse sol intègres en excluant le cas échéant les deuxièmes et/ou troisièmes signaux de vitesse sol erronés.

L'ensemble des étapes peuvent s'enchaîner de façon séquentielle. Cependant, la neuvième étape peut se dérouler simultanément à au moins une des huit premières étapes.

L'invention et ses avantages apparaîtront avec plus de détails dans le cadre de la description qui suit avec des exemples de réalisation donnés à titre illustratif en référence aux figures annexées qui représentent :

- la figure 1, un aéronef à voilure tournante équipé d'un dispositif de capteurs de pilotage selon l'invention, et
- les figures 2 à 4, plusieurs modes de réalisation d'un dispositif de capteurs de pilotage selon l'invention.

Les éléments présents dans plusieurs figures distinctes sont affectés d'une seule et même référence.

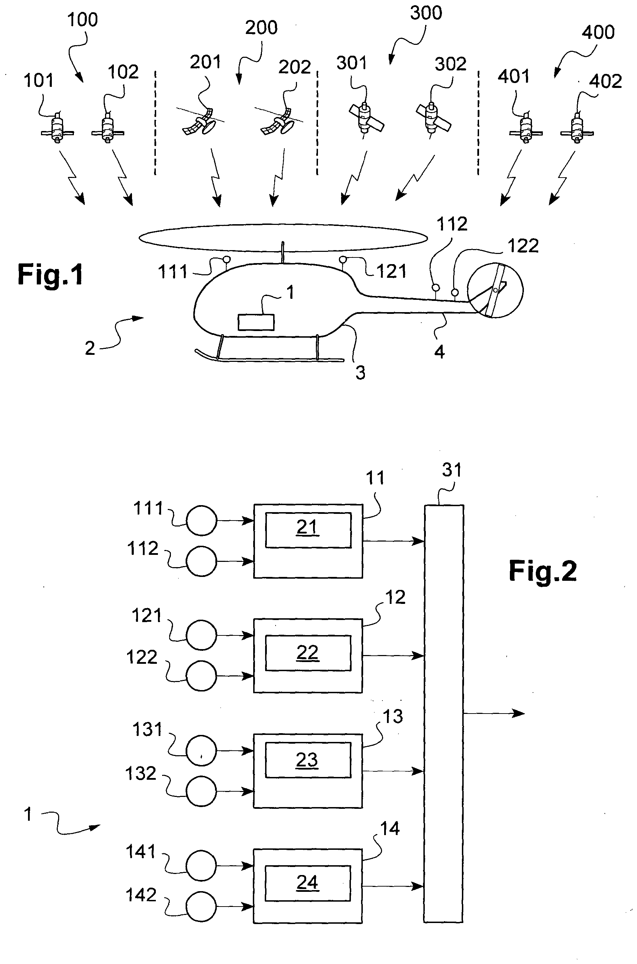

La figure 1 représente un aéronef 2 à voilure tournante équipé d'un dispositif de capteurs de pilotage 1 selon l'invention. Ce dispositif de capteurs de pilotage 1 est muni de quatre antennes 111,112,121,122. Deux antennes 111,121 sont positionnées au-dessus du fuselage 3 de l'aéronef 2 et deux antennes 112,122 sont positionnées sur la poutre de queue 4 de l'aéronef 2. Ces antennes 111,112,121,122 permettent de capter des signaux initiaux de navigation émis par différents satellites 101,102,201,202,301,302,401,402.

Les satellites 101,102,201,202,301,302,401, 402 appartiennent respectivement à un système GNSS 100,200, 300,400 tels que le système GPS, le système GLONASS, le système GALILEO, le système QZSS et les systèmes BEIDOU.

Selon un premier mode de réalisation du dispositif de capteurs de pilotage 1 représenté sur la figure 2, le dispositif de capteurs de pilotage 1 comporte quatre moyens de réception GNSS 11,12,13,14 dédiés respectivement à un système GNSS 100,200,300,400 et un second module de détection et d'exclusion de pannes FDE2 31 relié à chaque moyen de réception GNSS 11, 12,13,14. Le dispositif de capteurs de pilotage 1 est ainsi redondant au niveau des systèmes GNSS 100,200,300, 400 et capable de couvrir quatre systèmes GNSS 100, 200,300,400 et de pallier ainsi toute défaillance d'au moins un de ces systèmes GNSS 100,200,300,400. Chaque moyen de réception GNSS 11,12,13,14 est relié à deux antennes 111,112,121,122,131,132,141,142 et comporte un premier module de détection et d'exclusion de pannes FDE1 21,22,23,24.

Chaque premier module de détection et d'exclusion de pannes FDE1 21,22,23,24 reçoit et analyse les signaux initiaux de navigation d'un moyen de réception GNSS 11,12,13,14 afin de détecter des signaux initiaux de navigation intègres et des signaux initiaux de navigation erronés.

Ensuite, chaque premier module de détection et d'exclusion de pannes FDE1 21,22,23,24 peut déterminer à partir de ces signaux initiaux intègres un premier signal de vitesse sol de l'aéronef 2. Ce premier signal de vitesse sol de l'aéronef 2 peut être déterminé par exemple par une méthode V-RAIM de contrôle autonome de l'intégrité.

De fait, chaque moyen de réception GNSS 11, 12,13,14 peut délivrer un premier signal de vitesse sol de l'aéronef 2 en garantissant un premier niveau de surveillance autonome et l'intégrité de ce premier signal de vitesse sol en cas de pannes simples d'un satellite d'un système GNSS 100,200,300,400.

Le second module de détection et d'exclusion de pannes FDE2 31 reçoit et compare ces premiers signaux de vitesse sol provenant des quatre moyens de réception GNSS 11,12,13,14. Le second module de détection et d'exclusion de pannes FDE2 31 peut alors détecter des pannes multiples d'au moins un système GNSS 100,200,300,400, exclure chaque système GNSS 100,200,300,400 subissant cette panne multiple et déterminer un deuxième signal de vitesse sol de l'aéronef 2.

Le second module de détection et d'exclusion de pannes FDE2 31 peut appliquer la méthode connue de la médiane pour déterminer, à partir des deux premiers signaux de vitesse sol, le deuxième signal de vitesse sol.

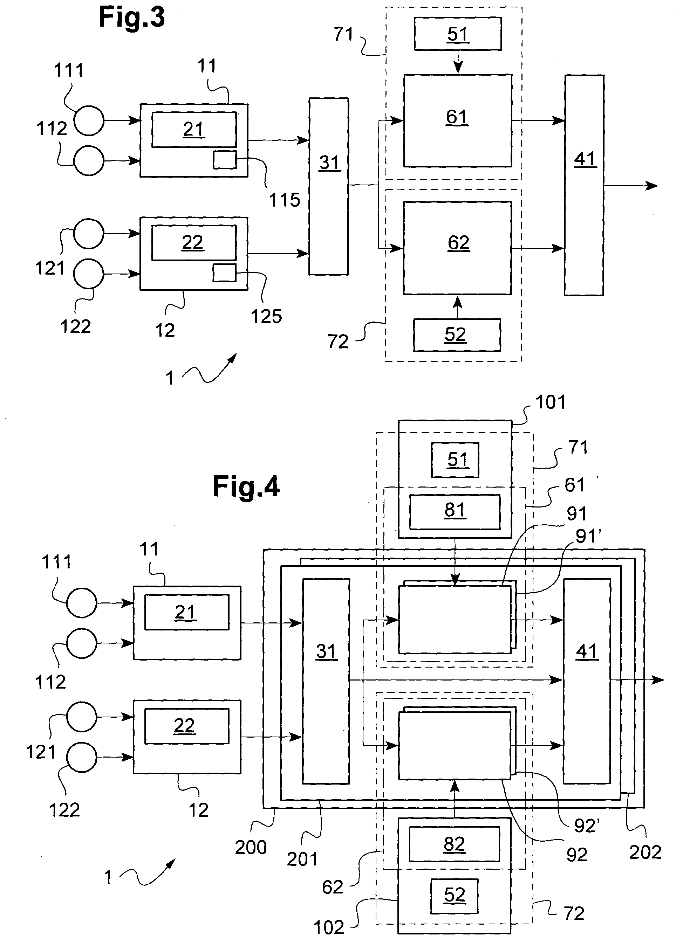

Selon un second mode de réalisation du dispositif de capteurs de pilotage 1 représenté sur la figure 3, le dispositif de capteurs de pilotage 1 comporte deux moyens de réception GNSS 11,12, chaque moyen de réception GNSS 11,12 étant relié à deux antennes 111, 112,121,122, un second module de détection et d'exclusion de pannes FDE2 31, deux modules inertiels IMU 51,52, deux plateformes d'hybridation 61,62 et un troisième module de détection et d'exclusion de pannes FDE3 41.

De plus, chaque moyen de réception GNSS 11, 12 comporte un premier module de détection et d'exclusion de pannes FDE1 21,22 ainsi qu'une horloge atomique 115,125. Cette horloge atomique 115,125 est utilisée comme référence de fréquence permettant de réduire d'une unité le nombre de satellites nécessaires à chaque moyen de réception GNSS 11,12 pour déterminer d'une part une panne simple de satellites et d'autre part un premier signal de vitesse sol.

Le second module de détection et d'exclusion de pannes FDE2 31 est relié aux deux moyens de réception GNSS 11,12, et aux deux plateformes d'hybridation 61,62 et délivre un deuxième signal de vitesse sol de l'aéronef 2.

Chaque module inertiel IMU 51,52 fournit des signaux de mesures inertielles d'accélérations et de vitesses angulaires et est relié à une plateforme d'hybridation 61,62. Un module inertiel IMU 51,52 et la plateforme d'hybridation 61,62 à laquelle il est relié forment ainsi une chaîne inertielle 71,72. Chaque plateforme d'hybridation 61,62 reçoit les mesures inertielles d'accélérations et de vitesses angulaires et peut alors déterminer une vitesse sol inertielle pure de l'aéronef 2.

Chaque plateforme d'hybridation 61,62 reçoit également le deuxième signal de vitesse sol de l'aéronef 2 et peut alors traiter ce deuxième signal de vitesse sol et la vitesse sol inertielle pure de l'aéronef 2 afin de déterminer un troisième signal de vitesse sol de l'aéronef 2.

Ce troisième signal de vitesse sol est une vitesse sol hybridée de ce deuxième signal de vitesse sol et de la vitesse sol inertielle pure lorsque ce deuxième signal de vitesse sol est intègre. Ce troisième signal de vitesse sol est égal à la vitesse sol inertielle pure lorsque ce deuxième signal de vitesse sol est erroné ou non disponible. Ce troisième signal de vitesse sol est ainsi disponible de façon continue.

Le troisième module de détection et d'exclusion de pannes FDE3 41 est relié aux deux plateformes d'hybridation 61,62. Ce troisième module de détection et d'exclusion de pannes FDE3 41 reçoit, analyse et compare ainsi deux troisièmes signaux de vitesse sol de l'aéronef 2 afin de déterminer un quatrième signal de vitesse sol de l'aéronef 2 en utilisant par exemple la méthode de la médiane.

Le troisième module de détection et d'exclusion de pannes FDE3 41 peut ainsi détecter des incohérences entre ces troisièmes signaux de vitesse sol de l'aéronef 2 consécutives par exemple à une panne d'une plateforme d'hybridation 61,62 ou bien d'un module inertiel IMU 51,52.

Selon ce second mode de réalisation, l'intégrité et la disponibilité du quatrième signal de vitesse sol de l'aéronef 2 est améliorée en utilisant deux modules inertiels IMU 51,52 et deux récepteurs GNSS 11,12 de deux systèmes GNSS 100,200 indépendants et distincts.

Selon un troisième mode de réalisation du dispositif de capteurs de pilotage 1 représenté sur la figure 4, le dispositif de capteurs de pilotage 1 comporte, comme le second mode de réalisation, deux moyens de réception GNSS 11,12, un second module de détection et d'exclusion de pannes FDE2 31, deux modules inertiels IMU 51,52, deux plateformes d'hybridation 61,62, et un troisième module de détection et d'exclusion de pannes FDE3 41. Chaque moyen de réception GNSS 11,12 est dédié à un seul système GNSS 100,200 permettant ainsi de couvrir deux systèmes GNSS 100,200, par exemple le système GPS et le système GALILEO.

Le dispositif de capteurs de pilotage 1 comporte également un calculateur 200 muni de deux voies de calcul 201,202. Chaque plateforme d'hybridation 61,62 comporte une plateforme virtuelle purement inertielle 81, 82 et deux filtres aux erreurs d'hybridation 91,91',92,92' , un filtre aux erreurs d'hybridation 91,91',92,92' étant situé dans chaque voie de calcul 201,202.

Selon chaque voie de calcul 201,202, le second module de détection et d'exclusion de pannes FDE2 31 est relié aux deux moyens de réception GNSS 11,12 et à deux filtres aux erreurs d'hybridation 91,91',92,92' ainsi qu'au troisième module de détection et d'exclusion de pannes FDE3 41. Le second module de détection et d'exclusion de pannes FDE2 31 délivre ainsi un deuxième signal de vitesse sol intègre de l'aéronef 2.

Une plateforme virtuelle purement inertielle 81, 82 est reliée à un module inertiel IMU 51,52 et forme ainsi avec ce module inertiel IMU 51,52 une centrale inertielle 101,102 fournissant une vitesse sol inertielle pure de l'aéronef 2.

Chaque filtre aux erreurs d'hybridation 91,91', 92,92' est de préférence un filtre de Kalman.

Chaque filtre aux erreurs d'hybridation 91,91', 92,92' reçoit, analyse et compare le deuxième signal de vitesse sol de l'aéronef 2 et la vitesse sol inertielle pure de l'aéronef 2, puis détermine le troisième signal de vitesse sol de l'aéronef 2 qui peut être une vitesse sol hybridée ou bien la vitesse sol inertielle pure. Ce troisième signal de vitesse sol est ainsi disponible de façon continue.

Le troisième module de détection et d'exclusion de pannes FDE3 41 est relié aux filtres aux erreurs d'hybridation 91,91',92,92' ainsi qu'au second module de détection et d'exclusion de pannes FDE2 31. Ce troisième module de détection et d'exclusion de pannes FDE3 41 reçoit, analyse et compare alors deux troisièmes signaux de vitesse sol et le deuxième signal de vitesse sol, puis détermine un quatrième signal de vitesse sol de l'aéronef 2 selon ces deux voies de calcul 201,202. Le troisième module de détection et d'exclusion de pannes FDE3 41 utilise par exemple la méthode de la médiane.

En outre, le troisième module de détection et d'exclusion de pannes FDE3 41 peut détecter des incohérences parmi les deux troisièmes signaux de vitesse sol et le deuxième signal de vitesse sol de l'aéronef 2 et identifier le signal de vitesse sol erroné. Le troisième module de détection et d'exclusion de pannes FDE3 41 permet ensuite d'exclure le cas échéant le signal de vitesse sol erroné.

De fait, le dispositif de capteurs de pilotage 1 permet d'assurer la continuité de fourniture d'un quatrième signal de vitesse sol.

Le fonctionnement de ce troisième mode de réalisation est analogue au fonctionnement du second mode de réalisation. L'utilisation de deux moyens de réception GNSS 11,12 et deux centrales inertielles 101, 102 permet de garantir une disponibilité et une intégrité du quatrième signal de vitesse sol de l'aéronef 2 y compris en cas d'indisponibilité d'un deuxième signal de vitesse sol intègre. Avantageusement, la comparaison des second et troisièmes signaux de vitesse sol au niveau du troisième module de détection et d'exclusion de pannes FDE3 41 permet de détecter des anomalies sur plusieurs systèmes GNSS 100,200 qui aurait pu passer inaperçues selon le second mode de réalisation du dispositif de capteurs de pilotage 1, telles que des brouillages ou des leurrages par exemple. L'intégrité de ce quatrième signal de vitesse sol est ainsi augmentée et est alors suffisante pour un dispositif d'aide au pilotage de l'aéronef 2.

Enfin, ce dispositif de capteurs de pilotage 1 utilisent des composants standards, tels que notamment deux moyens de réception GNSS 11,12 et deux centrales inertielles 101,102 par exemple, afin de réduire son coût.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Dispositif de capteurs de pilotage (1) destiné à un aéronef (2) à voilure tournante comportant

   - des moyens de réception GNSS (11,12,13,14) de constellations d'au moins deux systèmes GNSS (100,200, 300,400) indépendants, lesdits moyens de réception GNSS (11,12,13,14) recevant des signaux initiaux de plusieurs satellites (101,102,201,202,301,302,401,402),
   - au moins un module de détection et d'exclusion de pannes FDE (21,22,31),

   **caractérisé en ce que**

   - chaque module de détection et d'exclusion de pannes FDE (21,22,31,41) reçoit au moins deux signaux d'entrées et délivrant un signal de sortie, chaque signal de sortie comportant une mesure et un état d'intégrité,
   - chaque moyen de réception GNSS (11,12,13, 14) comporte un premier module de détection et d'exclusion de panne FDE1 (21,22),
   - chaque premier module de détection et d'exclusion de pannes FDE1 (21,22) reçoit et analyse lesdits signaux initiaux et détecte des signaux initiaux intègres et/ou des signaux initiaux erronés,
   - chaque moyen de réception GNSS (11,12,13, 14) délivre une mesure et un état d'intégrité d'un premier signal de vitesse sol dudit aéronef (2) en repère géographique pour au moins un système GNSS (100,200,300,400) à partir desdits signaux initiaux intègres en excluant le cas échéant lesdits signaux initiaux erronés,
   - ledit dispositif de capteurs de pilotage (1) comporte au moins un second module de détection et d'exclusion de pannes FDE2 (31), chaque second module de détection et d'exclusion de pannes FDE2 (31) étant en communication avec au moins deux desdits moyens de réception GNSS (11,12,13,14) et recevant, analysant et comparant lesdits premiers signaux de vitesse sol délivrés par lesdits au moins deux moyens de réception GNSS (11,12,13,14), détectant des premiers signaux de vitesse sol intègres et/ou des premiers signaux de vitesse sol erronés, chaque second module de détection et d'exclusion de pannes FDE2 (31) pouvant alors détecter et exclure chaque système GNSS (100,200,300, 400) défectueux fournissant un premier signal de vitesse sol erroné, puis déterminer et délivrer le cas échéant une mesure et un état d'intégrité d'un deuxième signal de vitesse sol dudit aéronef (2) à partir d'au moins deux premiers signaux de vitesse sol intègres.

**2.** Dispositif de capteurs de pilotage (1) selon la revendication 1,
**caractérisé en ce que** chaque moyen de réception GNSS (11,12,13,14) comporte un premier module de détection et d'exclusion de panne FDE1 (21,22) par système GNSS (100,200,300,400).

**3.** Dispositif de capteurs de pilotage (1) selon l'une quelconque des revendications 1 à 2,
**caractérisé en ce que** ledit dispositif de capteurs de pilotage (1) comporte au moins trois systèmes GNSS (100,200,300,400) indépendants et chaque second module de détection et d'exclusion de pannes FDE2 (31) est en communication avec au moins trois desdits moyens de réception GNSS (11,12,13, 14) et reçoit, analyse et compare lesdits premiers signaux de vitesse sol délivrés par lesdits au moins trois moyens de réception GNSS (11,12,13,14), détecte des premiers signaux de vitesse sol intègres et/ou des premiers signaux de vitesse sol erronés, chaque second module de détection et d'exclusion de pannes FDE2 (31) pouvant alors détecter et exclure chaque système GNSS (100,200,300,400) défectueux fournissant un premier signal de vitesse sol erroné, puis déterminer et délivrer une mesure et un état d'intégrité d'un deuxième signal de vitesse sol dudit aéronef (2) à partir d'au moins deux premiers signaux de vitesse sol intègres en excluant le cas échéant lesdits premiers signaux de vitesse sol erronés.

**4.** Dispositif de capteurs de pilotage (1) selon l'une quelconque des revendications 1 à 3,
**caractérisé en ce que** ledit dispositif de capteurs de pilotage (1) comporte au moins un module inertiel IMU (51,52) et au moins une plateforme d'hybridation (61,62),

   - chaque module inertiel IMU (51,52) fournissant des signaux de mesures inertielles caractérisant des accélérations et des vitesses angulaires dudit aéronef (2),
   - chaque plateforme d'hybridation (61,62) étant en communication avec un second module de détection et d'exclusion de pannes FDE2 (31) et un module inertiel IMU (51,52),
   - chaque plateforme d'hybridation (61,62) reçoit et traite lesdits signaux de mesures inertielles et éventuellement un deuxième signal de vitesse sol, puis détermine et délivre une mesure constituant un troisième signal de vitesse sol dudit aéronef (2) à partir desdits signaux de mesures inertielles et le cas échéant d'un deuxième signal de vitesse sol intègre, ledit troisième signal de vitesse sol étant une vitesse sol inertielle pure lorsque ladite plateforme d'hybridation (61, 62) ne reçoit aucun deuxième signal de vitesse sol intègre et une vitesse sol hybridée lorsque ladite plateforme d'hybridation (61,62) reçoit un deuxième signal de vitesse sol intègre, ledit troisième signal de vitesse sol étant alors disponible de façon continue.

**5.** Dispositif de capteurs de pilotage (1) selon la revendication 4,
**caractérisé en ce que** ledit dispositif de capteurs de pilotage (1) comporte au moins deux plateformes d'hybridation (61,62), au moins deux modules inertiels IMU (51,52) et au moins un troisième module de détection et d'exclusion de pannes FDE3 (41), une plateforme d'hybridation (61,62) et un module inertiel IMU (51,52) formant une chaîne inertielle (71, 72), chaque troisième module de détection et d'exclusion de pannes FDE3 (41) étant en communication avec au moins deux plateformes d'hybridation (61,62) afin de déterminer et de délivrer un quatrième signal de vitesse sol, chaque troisième module de détection et d'exclusion de pannes FDE3 (41) recevant, analysant et comparant lesdits troisièmes signaux de vitesse sol délivrés par lesdites plateformes d'hybridation (61,62) et détectant des troisièmes signaux de vitesse sol intègres et/ou des troisièmes signaux de vitesse sol erronés, chaque troisième module de détection et d'exclusion de pannes FDE3 (41) pouvant alors détecter une panne sur une chaîne inertielle (71,72) et exclure éventuellement ladite chaîne inertielle (71,72) à partir desdits troisièmes signaux de vitesse sol erronés, puis déterminer et délivrer le cas échéant une mesure et un état d'intégrité dudit quatrième signal de vitesse sol dudit aéronef (2) à partir d'au moins deux troisièmes signaux de vitesse sol intègres.

**6.** Dispositif de capteurs de pilotage (1) selon la revendication 5,
**caractérisé en ce que** ledit dispositif de capteurs de pilotage (1) comporte au moins trois plateformes d'hybridation (61,62), au moins trois modules inertiels IMU (51,52), chaque troisième module de détection et d'exclusion de pannes FDE3 (41) étant en communication avec au moins trois plateformes d'hybridation (61,62) afin de déterminer et de délivrer un quatrième signal de vitesse sol, chaque troisième module de détection et d'exclusion de pannes FDE3 (41) recevant, analysant et comparant lesdits troisièmes signaux de vitesse sol délivrés par lesdites plateformes d'hybridation (61,62) et détectant des troisièmes signaux de vitesse sol intègres et/ou des troisièmes signaux de vitesse sol erronés, chaque troisième module de détection et d'exclusion de pannes FDE3 (41) pouvant alors détecter une panne sur une chaîne inertielle (71,72) et exclure éventuellement ladite chaîne inertielle (71,72) à partir desdits troisièmes signaux de vitesse sol erronés, puis déterminer et délivrer une mesure et un état d'intégrité dudit quatrième signal de vitesse sol dudit aéronef (2) à partir d'au moins deux troisièmes signaux de vitesse sol intègres en excluant le cas échéant lesdits troisièmes signaux de vitesse sol erronés.

**7.** Dispositif de capteurs de pilotage (1) selon l'une quelconque des revendications 5 à 6, **caractérisé en ce que** chaque troisième module de détection et d'exclusion de pannes FDE3 (41) est en communication avec au moins un second module de détection et d'exclusion de pannes FDE2 (31) afin de recevoir, d'analyser et de comparer au moins un deuxième signal de vitesse sol et lesdits troisièmes signaux de vitesse sol, de détecter et localiser des deuxièmes et/ou des troisièmes signaux de vitesse sol intègres ainsi que des deuxièmes et/ou des troisièmes signaux de vitesse sol erronés, puis de déterminer et de délivrer une mesure et un état d'intégrité dudit quatrième signal de vitesse sol dudit aéronef (2) à partir d'au moins un deuxième signal de vitesse sol intègre et/ou d'au moins deux troisièmes signaux de vitesse sol intègres en excluant le cas échéant lesdits deuxièmes et/ou troisièmes signaux de vitesse sol erronés.

**8.** Dispositif de capteurs de pilotage (1) selon l'une quelconque des revendications 5 à 7, **caractérisé en ce que**

> - chaque plateforme d'hybridation (61,62) comporte une plateforme virtuelle purement inertielle (81,82) et deux filtres aux erreurs d'hybridation (91,92) communiquant entre eux, une plateforme virtuelle purement inertielle (81,82) étant en communication avec un module Inertiel IMU (51,52), formant ainsi une centrale inertielle (101,102),
> - ledit dispositif de capteurs de pilotage (1) comporte deux centrales inertielles (101,102), un calculateur (200) à deux voies de calcul (201, 202) et quatre filtres aux erreurs d'hybridation (91,91',92,92'), chaque voie de calcul (201,202) mettant en communication un filtre aux erreurs d'hybridation (91,91',92,92') avec d'une part un second module de détection et d'exclusion de pannes FDE2 (31) et d'autre part un troisième module de détection et d'exclusion de pannes FDE3 (41),

> - chaque second module de détection et d'exclusion de pannes FDE2 (31) étant en communication avec deux filtres aux erreurs d'hybridation (91,92) pour chaque voie de calcul (201, 202),
> - chaque troisième module de détection et d'exclusion de pannes FDE3 (41) étant en communication avec deux filtres aux erreurs d'hybridation (91,92) pour chaque voie de calcul (201, 202).

**9.** Dispositif de capteurs de pilotage (1) selon l'une quelconque des revendications 5 à 8, **caractérisé en ce qu'**au moins un second module de détection et d'exclusion de pannes FDE2 (31,32) et/ou au moins un troisième module de détection et d'exclusion de pannes FDE3 (41,42) utilise(nt) une méthode de détermination selon la valeur médiane.

**10.** Dispositif de capteurs de pilotage (1) selon l'une quelconque des revendications 1 à 9, **caractérisé en ce qu'**au moins un moyen de réception GNSS (11,12,13,14) comporte une horloge atomique (115,125).

**11.** Dispositif de capteurs de pilotage (1) selon l'une quelconque des revendications 1 à 10, **caractérisé en ce que** lesdits moyens de réception GNSS (11,12, 13,14) sont en communication avec des systèmes GNSS (100,200, 300,400), choisis parmi une liste comportant le système GPS, le système GLONASS, le système GALILEO, le système QZSS et les systèmes BEIDOU ainsi que le système IRIDIUM.

**12.** Procédé de détermination d'une vitesse sol d'un aéronef (2), **caractérisé en ce que**,

> - au cours d'une première étape, on reçoit des signaux initiaux de navigation provenant de plusieurs satellites (101,102, 201,202) appartenant à des constellations d'au moins deux systèmes GNSS (100,200,300,400) indépendants,
> - au cours d'une seconde étape, on analyse lesdits signaux initiaux pour chaque système GNSS (100,200,300,400),
> - au cours d'une troisième étape, on détecte des signaux initiaux intègres et/ou des signaux initiaux erronés,
> - au cours d'une quatrième étape, on délivre une mesure et un état d'intégrité d'au moins deux premiers signaux de vitesse sol dudit aéronef (2) en repère géographique pour au moins deux systèmes GNSS (100,200,300,400) indépendants à partir desdits signaux initiaux intègres en excluant le cas échéant lesdits signaux initiaux erronés,

- au cours d'une cinquième étape, on analyse et on compare lesdits premiers signaux de vitesse sol,
- au cours d'une sixième étape, on détecte des premiers signaux de vitesse sol intègres et/ou des premiers signaux de vitesse sol erronés,
- au cours d'une septième étape, on détecte et on exclut chaque système GNSS (100,200,300, 400) défectueux fournissant un premier signal de vitesse sol erroné, et
- au cours d'une huitième étape, on détermine et on délivre une mesure et un état d'intégrité d' un deuxième signal de vitesse sol dudit aéronef (2) à partir d'au moins deux premiers signaux de vitesse sol intègres en excluant le cas échéant lesdits premiers signaux de vitesse sol erronés.

13. Procédé de détermination d'une vitesse sol d'un aéronef (2) selon la revendication 12, **caractérisé en ce que**,

- au cours d'une neuvième étape, on acquiert des signaux de mesures inertielles, lesdits signaux de mesures inertielles caractérisant des accélérations et des vitesses angulaires dudit aéronef (2),
- au cours d'une dixième étape, on traite chaque deuxième signal de vitesse sol et lesdits signaux de mesures inertielles,
- au cours d'une onzième étape, on détermine et on délivre au moins une mesure constituant au moins un troisième signal de vitesse sol dudit aéronef (2) à partir desdits signaux de mesures inertielles et le cas échéant d'un deuxième signal de vitesse sol intègre, ledit troisième signal de vitesse sol étant alors disponible de façon continue,
- au cours d'une douzième étape, on analyse et on compare lesdits troisièmes signaux de vitesse sol,
- au cours d'une treizième étape, on détecte des troisièmes signaux de vitesse sol intègres et/ou des troisièmes signaux de vitesse sol erronés, et
- au cours d'une quatorzième étape, on détermine et on délivre une mesure et un état d'intégrité d'un quatrième signal de vitesse sol dudit aéronef (2) à partir d'au moins deux troisièmes signaux de vitesse sol intègres en excluant le cas échéant lesdits troisièmes signaux de vitesse sol erronés.

14. Procédé de détermination d'une vitesse sol d'un aéronef (2) selon la revendication 12, **caractérisé en ce que**,

- au cours d'une neuvième étape, on acquiert des signaux de mesures inertielles, lesdits signaux de mesures inertielles caractérisant des accélérations et des vitesses angulaires dudit aéronef (2),
- au cours d'une dixième étape, on traite chaque deuxième signal de vitesse sol et lesdits signaux de mesures inertielles,
- au cours d'une onzième étape, on détermine et on délivre au moins une mesure constituant au moins un troisième signal de vitesse sol dudit aéronef (2) à partir desdits signaux de mesures inertielles et le cas échéant d'un deuxième signal de vitesse sol intègre, ledit troisième signal de vitesse sol étant alors disponible de façon continue,
- au cours d'une douzième étape, on analyse et on compare au moins un deuxième signal de vitesse sol et lesdits troisièmes signaux de vitesse sol,
- au cours d'une treizième étape, on détecte et on localise des deuxièmes signaux de vitesse sol intègres et/ou des troisièmes signaux de vitesse sol intègres ainsi que des deuxièmes signaux de vitesse sol erronés et/ou des troisièmes signaux de vitesse sol erronés, et
- au cours d'une quatorzième étape, on détermine et on délivre une mesure et un état d'intégrité d'un quatrième signal de vitesse sol dudit aéronef (2) à partir d'au moins un deuxième signal de vitesse sol intègre et/ou d'au moins deux troisièmes signaux de vitesse sol intègres en excluant le cas échéant lesdits deuxièmes et/ou troisièmes signaux de vitesse sol erronés.

**Patentansprüche**

1. Navigationssensorvorrichtung (1) für ein Drehflügelflugzeug (2) mit

- GNSS-Empfangsmitteln (11, 12, 13, 14) in Konstellationen von mindestens zwei unabhängigen GNSS-Systemen (100, 200, 300, 400), wobei die GNSS-Empfangsmittel (11, 12, 13, 14) anfängliche Signale mehrerer Satelliten (101, 102, 201, 202, 301, 302, 401, 402) empfangen,
- mindestens einem Modul zum Erfassen und zum Ausschließen von Ausfällen FDE (21, 22, 31),

**dadurch gekennzeichnet, dass**

- jedes Modul FDE (21, 22, 31) zum Erfassen und zum Ausschließen von Ausfällen mindestens zwei Eingangssignale empfängt und ein Ausgangssignal liefert, wobei jedes Ausgangssignal einen Messwert und einen Integritätsstatus umfasst,

- jedes GNSS-Empfangsmittel (11, 12, 13, 14) ein erstes Modul FDE1 (21, 22) zum Erfassen und zum Ausschließen von Ausfällen aufweist,
- jedes erste Modul FDE1 (21, 22) zum Erfassen und zum Ausschließen von Ausfällen FDE1 die anfänglichen Signale empfängt und analysiert, und integre Anfangssignale und/oder fehlerhafte Anfangssignale erfasst,
- jedes GNSS-Empfangsmittel (11, 12, 13, 14) einen Messwert und einen Integritätsstatus eines ersten Signals der Geschwindigkeit des Luftfahrzeugs (2) über dem Boden in einem geographischen Koordinatensystem für mindestens ein GNSS-System (100, 200, 300, 400) ausgehend von den integren Anfangssignalen gegebenenfalls unter Ausschluss der fehlerhaften Anfangssignale liefert,
- die Navigationssensorvorrichtung (1) mindestens ein zweites Modul FDE2 (31) zum Erfassen und Ausschließen von Ausfällen aufweist, wobei jedes zweite Modul FDE2 (31) zum Erfassen und Ausschließen von Ausfällen mit mindestens zwei der GNSS-Empfangsmittel (11, 12, 13, 14) in Verbindung steht, und die ersten Signale der Geschwindigkeit über dem Boden empfängt, analysiert und vergleicht, die von den mindestens zwei GNSS-Empfangsmitteln (11, 12, 13, 14) geliefert werden, erste integre Signale der Geschwindigkeit über dem Boden und/oder erste fehlerhafte Signale der Geschwindigkeit über dem Boden erfasst, wobei jedes zweite Modul FDE2 (31) zum Erfassen und Ausschließen von Ausfällen jedes fehlerhafte GNSS-System (100, 200, 300, 400), welches ein fehlerhaftes erstes Signal der Geschwindigkeit über dem Boden liefert, erfassen und ausschließen kann, und gegebenenfalls einen Messwert und einen Integritätszustand eines zweiten Signals der Geschwindigkeit des Luftfahrzeugs (2) über dem Boden ausgehend von mindestens zwei integren ersten Signalen der Geschwindigkeit über dem Boden bestimmen und liefern kann.

2. Navigationssensorvorrichtung (1) nach Anspruch 1, **dadurch gekennzeichnet, dass** jedes GNSS-Empfangsmittel (11, 12, 13, 14) ein erstes Modul FDE1 (21, 22) zum Erfassen und Ausschließen von Ausfällen pro GNSS-System (100, 200, 300, 400) aufweist.

3. Navigationssensorvorrichtung (1) nach einem der Ansprüche 1 bis 2, **dadurch gekennzeichnet, dass** die Navigationssensorvorrichtung (1) mindestens drei GNSS-Systeme (100, 200, 300, 400) aufweist, die unabhängig voneinander sind und jedes zweite Modul FDE2 (31) zum Erfassen und Ausschließen von Ausfällen in Verbindung mit mindestens drei der GNSS-Empfangsmittel (11, 12, 13, 14) steht und die von den mindestens drei GNSS-Empfangsmitteln (11, 12, 13, 14) gelieferten ersten Signale der Geschwindigkeit über dem Boden empfängt, analysiert und vergleicht, die ersten integren Signale der Geschwindigkeit über dem Boden und/oder erste fehlerhafte Signale der Geschwindigkeit über dem Boden erfasst, wobei somit jedes zweite Modul FDE2 (31) zum Erfassen und Ausschließen von Ausfällen jedes GNSS-System (100, 200, 300, 400), welches defekt ist und ein erstes fehlerhaftes Signal der Geschwindigkeit über dem Boden liefert, erfassen und ausschließen kann, und dann einen Messwert und einen Integritätsstatus eines zweiten Signals der Geschwindigkeit des Luftfahrzeugs (2) über dem Boden ausgehend von mindestens zwei ersten integren Signalen der Geschwindigkeit über dem Boden gegebenenfalls unter Ausschluss der fehlerhaften ersten Signale der Geschwindigkeit über dem Boden bestimmen und liefern kann.

4. Navigationssensorvorrichtung (1) nach einem der Ansprüche 1 bis 3, **dadurch gekennzeichnet, dass** die Navigationssensorvorrichtung (1) mindestens ein Trägheitsmodul IMU (51, 52) und mindestens eine Hybridisierungsplattform (61, 62) aufweist,

- wobei jedes Trägheitsmodul IMU (51, 52) Signale von Trägheitsmessungen liefert, welche Beschleunigungen und Winkelgeschwindigkeiten des Luftfahrzeugs (2) charakterisieren,
- wobei jede Hybridisierungplattform (61, 62) mit einem zweiten Modul FDE2 (31) zum Erfassung und Ausschließen von Ausfällen und mit einem Trägheitsmodul IMU (51, 52) in Verbindung steht,
- wobei jede Hybridisierungsplattform (61, 62) die Trägheitsmesssignale und gegebenenfalls ein zweites Signal der Geschwindigkeit über dem Boden empfängt und verarbeitet und dann einen Messwert bestimmt und liefert, der ein drittes Signal der Geschwindigkeit des Luftfahrzeugs (2) über dem Boden darstellt ausgehend von den Trägheitsmesssignalen und gegebenenfalls einem integren zweiten Signal der Geschwindigkeit über dem Boden, wobei das dritte Signal der Geschwindigkeit über dem Boden eine reine Trägheitsgeschwindigkeit über dem Boden ist, wenn die Hybridisierungsplattform (61, 62) kein integres zweites Signal der Geschwindigkeit über dem Boden und einer hybridisierten Geschwindigkeit über dem Boden empfängt, wenn die Hybridisierungsplattform (61, 62) ein zweites integres Signal der Geschwindigkeit über dem Boden empfängt, wobei das dritte Signal der Geschwindigkeit über dem Boden somit kontinuierlich verfügbar ist.

5. Navigationssensorvorrichtung (1) nach Anspruch 4, **dadurch gekennzeichnet, dass** die Navigationssensorvorrichtung (1) mindestens zwei Hybridisierungsplattformen (61, 62), mindestens zwei Trägheitsmodule IMU (51, 52) und mindestens ein drittes Modul FDE3 (41) zum Erfassen und Ausschließen von Ausfällen aufweist, wobei eine Hybridisierungsplattform (61, 62) und ein Trägheitsmodul IMU (51, 52) eine Trägheitskette (71, 72) bilden, wobei jedes dritte Modul FDE3 (41) zum Erfassen und Ausschließen von Ausfällen in Verbindung mit mindestens zwei Hybridisierungsplattformen (61, 62) steht, um ein viertes Signal der Geschwindigkeit über dem Boden zu bestimmen und zu liefern, wobei jedes dritte Modul FDE3 (41) zum Erfassen und Ausschließen von Ausfällen die dritten Signale der Geschwindigkeit über dem Boden, die von den Hybridisierungsplattformen (61, 62) geliefert werden, empfängt, analysiert und vergleicht, und dritte integre Signale der Geschwindigkeit über dem Boden und/oder dritte fehlerhafte Signale der Geschwindigkeit über dem Boden erfasst, wobei jedes dritte Modul FDE3 (41) zum Erfassen und Ausschließen von Ausfällen einen Ausfall in einer Trägheitskette (71, 72) erfassen kann und gegebenenfalls die Trägheitskette (71, 72) ausgehend von den dritten fehlerhaften Signalen der Geschwindigkeit über dem Boden ausschließen kann, und dann gegebenenfalls einen Messwert und einen Integritätsstatus des vierten Signals der Geschwindigkeit des Luftfahrzeugs (2) über dem Boden ausgehend von mindestens zwei dritten integren Signalen der Geschwindigkeit über dem Boden bestimmen und liefern kann.

6. Navigationssensorvorrichtung (1) nach Anspruch 5, **dadurch gekennzeichnet, dass** die Navigationssensorvorrichtung (1) mindestens drei Hybridisierungsplattformen (61, 62), mindestens drei Trägheitsmodule IMU (51, 52) aufweist, wobei jedes dritte Modul FDE3 (41) zum Erfassen und Ausschließen von Ausfällen in Verbindung mit mindestens drei Hybridisierungsplattformen (61, 62) steht, um ein viertes Signal der Geschwindigkeit über dem Boden zu bestimmen und zu liefern, wobei jedes dritte Modul FDE3 (41) zum Bestimmen und Ausschließen von Ausfällen die dritten Signale der Geschwindigkeit über dem Boden empfängt, analysiert und vergleicht, welche von den Hybridisierungsplattformen (61, 62) geliefert werden, und dritte integre Signale der Geschwindigkeit über dem Boden und/oder dritte fehlerhafte Signale der Geschwindigkeit über dem Boden erfasst, wobei jedes dritte Modul FDE3 (41) zum Erfassen und Ausschließen von Ausfällen einen Ausfall in einer Trägheitskette (71, 72) erfassen kann und gegebenenfalls die Trägheitskette (71, 72) ausgehend von den fehlerhaften dritten Signalen der Geschwindigkeit über dem Boden ausschließen kann, dann einen Messwert und einen Integritätsstatus des vierten Signals der Geschwindigkeit des Luftfahrzeugs (2) über dem Boden bestimmen und liefern kann ausgehend von mindestens zwei integren dritten Signalen der Geschwindigkeit über dem Boden, gegebenenfalls unter Ausschluss der fehlerhaften dritten Signale der Geschwindigkeit über dem Boden.

7. Navigationssensorvorrichtung (1) nach einem der Ansprüche 5 bis 6, **dadurch gekennzeichnet, dass** jedes dritte Modul FDE3 (41) zum Erfassen und Ausschließen von Ausfällen in Verbindung mit mindestens einem zweiten Modul FDE2 (31) zum Erfassen und Ausschließen von Ausfällen steht, um mindestens ein zweites Signal der Geschwindigkeit über dem Boden und die dritten Signale der Geschwindigkeit über dem Boden zu empfangen, zu analysieren und zu vergleichen, um die zweiten und/oder die dritten integren Signale der Geschwindigkeit über dem Boden sowie die zweiten und/oder dritten fehlerhaften Signale über dem Boden zu erfassen und zu lokalisieren, und um dann einen Messwert und einen Integritätsstatus des vierten Signals der Geschwindigkeit des Luftfahrzeugs (2) über dem Boden ausgehend von mindestens einem zweiten integren Signal der Geschwindigkeit über dem Boden und/oder von mindestens zwei dritten integren Signalen der Geschwindigkeit über dem Boden und/oder von mindestens zwei dritten integren Signalen der Geschwindigkeit über dem Boden gegebenenfalls unter Ausschluss der zweiten und/oder dritten fehlerhaften Signale der Geschwindigkeit über dem Boden zu bestimmen und zu liefern.

8. Navigationssensorvorrichtung (1) nach einem der Ansprüche 5 bis 7, **dadurch gekennzeichnet, dass**

    - jede Hybridisierungsplattform (61, 62) eine virtuelle reine Trägheitsplattform (81, 82) und zwei Hybridisierungsfehlerfilter (91, 92), die miteinander kommunizieren, aufweist, wobei eine virtuelle reine Trägheitsplattform (81, 82) in Verbindung mit einem Trägheitsmodul IMU (51, 52) steht, die somit eine Trägheitszentrale (101, 102) bilden,
    - wobei die Navigationssensorvorrichtung (1) zwei Trägheitszentralen (101, 102), einen Rechner (200) mit zwei Rechenkanälen (201, 202) und vier Hybridisierungsfehlerfiltern (91, 91', 92, 92') aufweist, wobei jeder Rechenkanal (201, 202) einen Filter für Hybridisierungsfehler (91, 91', 92, 92') mit einerseits einem zweiten Modul FDE2 (31) zum Erfassen und Ausschließen von Ausfällen, und andererseits ein drittes Modul FDE3 (41) zum Erfassen und Ausschließen von Ausfällen verbindet,

- wobei jedes zweite Modul FDE2 (31) zum Erfassen und Ausschließen von Ausfällen in Verbindung mit zwei Hybridisierungsfehlerfiltern (91, 92) für jeden Rechenkanal (201, 202) steht,
- wobei jedes dritte Modul FDE3 (41) zum Erfassen und Ausschließen von Ausfällen in Verbindung mit zwei Filtern für Hybridisierungsfehler (91, 92) für jeden Rechenkanal (201, 202) steht.

9. Navigationssensorvorrichtung (1) nach einem der Ansprüche 5 bis 8, **dadurch gekennzeichnet, dass** mindestens ein zweites Modul FDE2 (31, 32) zum Erfassen und Ausschließen von Ausfällen und/oder mindestens ein drittes Modul FDE3 (41, 42) zum Erfassen und Ausschließen von Ausfällen ein Verfahren zur Bestimmung gemäß dem Mittelwert verwendet bzw. verwenden.

10. Navigationssensorvorrichtung (1) nach einem der Ansprüche 1 bis 9, **dadurch gekennzeichnet, dass** mindestes ein GNSS-Empfangsmittel (11, 12, 13, 14) eine Atomuhr (115, 125) aufweist.

11. Navigationssensorvorrichtung (1) nach einem der Ansprüche 1 bis 10, **dadurch gekennzeichnet, dass** die GNSS-Empfangsmittel (11, 12, 13, 14) in Verbindung mit den GNSS-Systemen (100, 200, 300, 400) stehen, die aus einer Liste ausgewählt sind, die das GPS-System, das GLONASS-System, das GALILEO-System, das QZSS-System und die BEIDOU-Systeme sowie das IRIDIUM-System umfasst.

12. Verfahren zum Bestimmen einer Geschwindigkeit eines Luftfahrzeugs (2) über dem Boden, **dadurch gekennzeichnet, dass**

- während eines ersten Schritts anfängliche Navigationssignale empfangen werden, die von mehreren Satelliten (101, 102, 201, 202) stammen, die Konstellationen mindestens zweier unabhängiger GNSS-Systeme (100, 200, 300, 400) zugehören,
- während eines zweiten Schritts die anfänglichen Signale für jedes GNSS-System (100, 200, 300, 400) analysiert werden,
- während eines dritten Schritts integre anfängliche Signale und/oder fehlerhaft anfängliche Signale erfasst werden,
- während eines vierten Schritts ein Messwert und ein Integritätsstatus mindestens zweier erster Signale der Geschwindigkeit des Luftfahrzeugs (2) über dem Boden in einem geographischen Koordinatensystem für mindestens zwei unabhängige GNSS-Systeme (100, 200, 300, 400) ausgehend von den integren anfänglichen Signalen gegebenenfalls unter Ausschluss von fehlerhaften Anfangssignalen geliefert werden,
- während eines fünften Schritts die ersten Signale der Geschwindigkeit über dem Boden analysiert und verglichen werden,
- während eines sechsten Schritts die ersten integren Signale der Geschwindigkeit über dem Boden und/oder erste fehlerhafte Signale der Geschwindigkeit über dem Boden erfasst werden,
- während eines siebten Schritts jedes GNSS-System (100, 200, 300, 400), welches defekt ist und eine erstes fehlerhaftes Signal der Geschwindigkeit über dem Boden liefert, erfasst und ausgeschlossen wird, und
- während eines achten Schritts ein Messwert und ein Integritätsstatus eines zweiten Signals der Geschwindigkeit des Luftfahrzeugs (2) über dem Boden ausgehend von mindestens zwei ersten integren Signalen der Geschwindigkeit über dem Boden gegebenenfalls unter Ausschluss von ersten fehlerhaften Signalen der Geschwindigkeit über dem Boden bestimmt und geliefert werden.

13. Verfahren zur Bestimmung einer Geschwindigkeit eines Luftfahrzeugs (2) über dem Boden nach Anspruch 12, **dadurch gekennzeichnet, dass**

- während eines neunten Schritts Trägheitsmesssignale gesammelt werden, wobei die Trägheitsmesssignale die Beschleunigungen und Winkelgeschwindigkeiten des Luftfahrzeugs (2) charakterisieren,
- während eines zehnten Schritts jedes zweite Signal der Geschwindigkeit über dem Boden und die Trägheitsmesssignale verarbeitet werden,
- während eines elften Schritts mindestens ein Messwert, der mindestens ein drittes Signal der Geschwindigkeit des Luftfahrzeugs (2) über dem Boden darstellt, ausgehend von den Trägheitsmesssignalen und gegebenenfalls von einem zweiten integren Signal der Geschwindigkeit über dem Boden bestimmt und geliefert wird, wobei das dritte Signal der Geschwindigkeit über dem Boden somit stetig verfügbar ist,
- während eines zwölften Schritts die dritten Signale der Geschwindigkeit über dem Boden analysiert und verglichen werden,
- während eines dreizehnten Schritts die dritten integren Signale der Geschwindigkeit über dem Boden und/oder dritte fehlerhafte Signale der Geschwindigkeit über dem Boden erfasst werden, und
- während eines vierzehnten Schritts ein Messwert und ein Integritätsstatus eines vierten Signals der Geschwindigkeit des Luftfahrzeugs (2) über dem Boden ausgehend von mindestens zwei integren dritten Signalen der Geschwindigkeit über dem Boden gegebenenfalls unter Ausschluss der dritten fehlerhaften Signale der Geschwindigkeit über dem Boden bestimmt und geliefert werden.

14. Verfahren zur Bestimmung einer Geschwindigkeit eines Luftfahrzeugs (2) über dem Boden nach Anspruch 12,
**dadurch gekennzeichnet, dass**

- während eines neunten Schritts Trägheitsmesssignale gesammelt werden, wobei die Trägheitsmesssignale Beschleunigungen und Winkelgeschwindigkeiten des Luftfahrzeugs (2) charakterisieren,
- während eines zehnten Schritts jedes zweite Signal der Geschwindigkeit über dem Boden und die Trägheitsmesssignale verarbeitet werden,
- während eines elften Schritts mindestens ein Messwert, der mindestens ein drittes Signal der Geschwindigkeit des Luftfahrzeugs (2) über dem Boden darstellt, ausgehend von den Trägheitsmesssignalen und gegebenenfalls einem zweiten integren Signal der Geschwindigkeit über dem Boden bestimmt und geliefert wird, wobei das dritte Signal der Geschwindigkeit über dem Boden somit stetig verfügbar ist,
- während eines zwölften Schritts mindestens ein zweites Signal der Geschwindigkeit über dem Boden und die dritten Signale der Geschwindigkeit über dem Boden analysiert und verglichen werden,
- während eines dreizehnten Schritts zweite integre Signale der Geschwindigkeit über dem Boden und/oder dritte integre Signale der Geschwindigkeit über dem Boden sowie zweite fehlerhafte Signale der Geschwindigkeit über dem Boden und/oder dritte fehlerhafte Signale der Geschwindigkeit über dem Boden erfasst und lokalisiert werden, und
- während eines vierzehnten Schritts ein Messwert und ein Integritätsstatus eines vierten Signals der Geschwindigkeit des Luftfahrzeugs (2) über dem Boden ausgehend von mindestens einem zweiten integren Signal der Geschwindigkeit über dem Boden und/oder von mindestens zwei dritten integren Signalen der Geschwindigkeit über dem Boden gegebenenfalls unter Ausschluss der zweiten und/oder dritten fehlerhaften Signale der Geschwindigkeit über dem Boden bestimmt und geliefert werden.

**Claims**

1. Piloting sensor device (1) intended for a rotary wing aircraft (2), comprising

- GNSS reception means (11, 12, 13, 14) for constellations of at least two independent GNSS systems (100, 200, 300, 400), said GNSS reception means (11, 12, 13, 14) receiving initial signals from a plurality of satellites (101, 102, 201, 202, 301, 302, 401, 402),
- at least one fault detection and exclusion module FDE (21, 22, 31),

**characterised in that**

- each fault detection and exclusion module FDE (21, 22, 31, 41) receives at least two input signals and provides an output signal, each output signal comprising a measurement and a state of integrity,
- each GNSS reception means (11, 12, 13, 14) comprises a first fault detection and exclusion module FDE1 (21, 22),
- each first fault detection and exclusion module FDE1 (21, 22) receives and analyses said initial signals and detects initial signals of integrity and/or incorrect initial signals,
- each GNSS reception means (11, 12, 13, 14) provides a measurement and a state of integrity of a first ground speed signal of said aircraft (2), in a geographical coordinate system, for at least one GNSS system (100, 200, 300, 400), on the basis of said initial signals of integrity and, excluding, if necessary said incorrect initials signals,
- said piloting sensor device (1) comprises at least one second fault detection and exclusion module FDE2 (31), each second fault detection and exclusion module FDE2 (31) being in communication with at least two of said GNSS reception means (11, 12, 13, 14) and receiving, analysing and comparing said first ground speed signals provided by said at least two GNSS reception means (11, 12, 13, 14), detecting first ground speed signals of integrity and/or incorrect first ground speed signals, each second fault detection and exclusion module FDE2 (31) then being able to detect and exclude each faulty GNSS system (100, 200, 300, 400) that is providing an incorrect ground speed signal, and to then determine and provide, if necessary, a measurement and a state of integrity of a second ground speed signal of said aircraft (2) from at least two first ground speed signals of integrity.

2. Piloting sensor device (1) according to claim 1, **char-**

**acterised in that** each GNSS reception means (11, 12, 13, 14) comprises one first fault detection and exclusion module FDE1 (21, 22) per GNSS system (100, 200, 300, 400).

3. Piloting sensor device (1) according to either claim 1 or claim 2, **characterised in that** said piloting sensor device (1) comprises at least three independent GNSS systems (100, 200, 300, 400), and each second fault detection and exclusion module FDE2 (31) is in communication with at least three of said GNSS reception means (11, 12, 13, 14) and receives, analyses and compares said first ground speed signals provided by said at least three GNSS reception means (11, 12, 13, 14), detects first ground speed signals of integrity and/or incorrect first ground speed signals, each second fault detection and exclusion module FDE2 (31) then being able to detect and exclude each faulty GNSS system (100, 200, 300, 400) that is providing an incorrect first ground speed signal, and to then determine and provide a measurement and a state of integrity of a second ground speed signal of said aircraft (2) from at least two first ground speed signals of integrity and excluding, if necessary, said incorrect first ground speed signals.

4. Piloting sensor device (1) according to any of claims 1 to 3, **characterised in that** said piloting sensor device (1) comprises at least one inertial module IMU (51, 52) and at least one hybridisation platform (61, 62),

> - each inertial IMU module (51, 52) providing inertial measurement signals that characterise accelerations and angular speeds of said aircraft (2),
> - each hybridisation platform (61, 62) being in communication with a second fault detection and exclusion module FDE2 (31) and an inertial module IMU (51, 52),
> - each hybridisation platform (61, 62) receives and processes the inertial measurement signals and optionally a second ground speed signal, and then determines and provides a measurement, constituting a third ground speed signal of said aircraft (2), from said inertial measurement signals and, if applicable, from a second ground speed signal of integrity, said third ground speed signal being a pure inertial ground speed when said hybridisation platform (61, 62) does not receive a second ground speed signal of integrity, and being a hybrid ground speed when said hybridisation platform (61, 62) receives a second ground speed signal of integrity, said third ground speed signal then being available continuously.

5. Piloting sensor device (1) according to claim 4, **char-**

**acterised in that** said piloting sensor device (1) comprises at least two hybridisation platforms (61, 62), at least two inertial modules IMU (51, 52) and at least one third fault detection and exclusion module FDE3 (41), a hybridisation platform (61, 62) and an inertial module IMU (51, 52) forming an inertia chain (71, 72), each third fault detection and exclusion module FDE3 (41) being in communication with at least two hybridisation platforms (61, 62) in order to determine and to provide a fourth ground speed signal, each third fault detection and exclusion module FDE3 (41) receiving, analysing and comparing said third ground speed signals provided by said hybridisation platforms (61, 62) and detecting third ground speed signals of integrity and/or incorrect third ground speed signals, each third fault detection and exclusion module FDE3 (41) then being able to detect a fault on an inertia chain (71, 72) and possibly exclude said inertia chain (71, 72) on the basis of said incorrect third ground speed signals, and to then determine and provide, if appropriate, a measurement and a state of integrity of said fourth ground speed signal of said aircraft (2) from at least two third ground speed signals of integrity.

6. Piloting sensor device (1) according to claim 5, **characterised in that** said piloting sensor device (1) comprises at least three hybridisation platforms (61, 62), at least three inertial modules IMU (51, 52), each third fault detection and exclusion module FDE3 (41) being in communication with at least three hybridisation platforms (61, 62) in order to determine and provide a fourth ground speed signal, each third fault detection and exclusion module FDE3 (41) receiving, analysing and comparing said third ground speed signals provided by said hybridisation platforms (61, 62) and detecting third ground speed signals of integrity and/or incorrect third ground speed signals, each third fault detection and exclusion module FDE3 (41) then being able to detect a fault on an inertia chain (71, 72) and possibly exclude said inertia chain (71, 72) on the basis of said incorrect third ground speed signals, and to then determine and provide a measurement and a state of integrity of said fourth ground speed signal of said aircraft (2) from at least two third ground speed signals of integrity, excluding, if necessary, said incorrect third ground speed signals.

7. Piloting sensor device (1) according to either claim 5 or claim 6, **characterised in that** each third fault detection and exclusion module FDE3 (41) is in communication with at least one second fault detection and exclusion module FDE2 (31) in order to receive, analyse and compare at least one second ground speed signal and said third ground speed signals, to detect and locate second and/or third ground speed signals of integrity as well as incorrect second and/or third ground speed signals, and to then determine and provide a measurement and a state of integrity of said fourth ground speed signal of said aircraft (2) from at least one second ground speed signal of integrity and/or at least two third ground speed signals of integrity, excluding, if necessary, said incorrect second and/or third ground speed signals.

8. Piloting sensor device (1) according to any of claims 5 to 7, **characterised in that**

- each hybridisation platform (61, 62) comprises a purely inertial virtual platform (81, 82) and two mutually communicating hybridisation error filters (91, 92), a purely inertial virtual platform (81, 82) being in communication with an inertial module IMU (51, 52), thus forming an central inertial unit (101, 102),
- said piloting sensor device (1) comprises two central inertial units (101, 102), a computer (200) having two calculation pathways (201, 202) and four hybridisation error filters (91, 91', 92, 92'), each calculation pathway (201, 202) bringing a hybridisation error filter (91, 91', 92, 92') into communication with a second fault detection and exclusion module FDE2 (31) and with a third fault detection and exclusion module FDE3 (41),
- each second fault detection and exclusion module FDE2 (31) being in communication with two hybridisation error filters (91, 92) for each calculation pathway (201, 202),
- each third fault detection and exclusion module FDE3 (41) being in communication with two hybridisation error filters (91, 92) for each calculation pathway (201, 202).

9. Piloting sensor device (1) according to any of claims 5 to 8, **characterised in that** at least one second fault detection and exclusion module FDE2 (31, 32) and/or at least one third fault detection and exclusion module FDE3 (41, 42) use(s) a midpoint method of determination.

10. Piloting sensor device (1) according to any of claims 1 to 9, **characterised in that** at least one GNSS reception means (11, 12, 13, 14) comprises an atomic clock (115, 125).

11. Piloting sensor device (1) according to any of claims 1 to 10, **characterised in that** said GNSS reception means (11, 12, 13, 14) are in communication with GNSS systems (100, 200, 300, 400) selected from a list comprising the GPS system, the GLONASS system, the GALILEO system, the QZSS system and the BEIDOU systems, as well as the IRIDIUM system.

12. Method for determining a ground speed of an aircraft (2), **characterised in that**,

- during a first step, initial navigation signals originating from a plurality of satellites (101, 102, 201, 202) belonging to constellations of at least two independent GNSS systems (100, 200, 300, 400) are received,
- during a second step, said initial signals are analysed for each GNSS system (100, 200, 300, 400),
- during a third step, initial signals of integrity and/or incorrect initial signals are detected,
- during a fourth step, a measurement and a state of integrity of at least two first ground speed signals of said aircraft (2) is provided, in a geographical coordinate system, for at least two independent GNSS systems (100, 200, 300, 400) on the basis of said initial signals of integrity and excluding, if necessary, said incorrect initial signals,
- during a fifth step, said first ground speed signals are analysed and compared,
- during a sixth step, first ground speed signals of integrity and/or incorrect first ground speed signals are detected,
- during a seventh step, each faulty GNSS system (100, 200, 300, 400) that is providing an incorrect first ground speed signal is detected and excluded, and
- during an eight step, a measurement and a state of integrity of a second ground speed signal of said aircraft (2) is determined and provided, on the basis of at least two first ground speed signals of integrity and excluding, if necessary, said incorrect first ground speed signals.

13. Method for determining a ground speed of an aircraft (2) according to claim 12, **characterised in that**

- during a ninth step, inertial measurement signals are acquired, said inertial measurement signals characterising accelerations and angular speeds of said aircraft (2),
- during a tenth step, each second ground speed signal and said inertial measurement signals are processed,
- during an eleventh step, at least one measurement constituting at least one third ground speed signal of said aircraft (2) is determined and provided, on the basis of said inertial measurement signals and, if appropriate, a second ground speed signal of integrity, said third ground speed signal then being available continuously,
- during a twelfth step, said third ground speed signals are analysed and compared,
- during a thirteenth step, third ground speed signals of integrity and/or incorrect third ground speed signals are detected, and

- during a fourteenth step, a measurement and a state of integrity of a fourth ground speed signal of said aircraft (2) are determined and provided, on the basis of at least two third ground speed signals of integrity and excluding, if necessary, said incorrect third ground speed signals.

14. Method for determining a ground speed of an aircraft (2) according to claim 12, **characterised in that**

- during a ninth step, inertial measurement signals are acquired, said inertial measurement signals characterising accelerations and angular speeds of said aircraft (2),
- during a tenth step, each second ground speed signal and said inertial measurement signals are processed,
- during an eleventh step, at least one measurement constituting at least one third ground speed signal of said aircraft (2) is determined and provided, on the basis of said inertial measurement signals and, if appropriate, a second ground speed signal of integrity, said third ground speed signal then being available continuously,
- during a twelfth step, at least one second ground speed signal and said third ground speed signals are analysed and compared,
- during a thirteenth step, second ground speed signals of integrity and/or third ground speed signals of integrity, as well as incorrect second ground speed signals and/or incorrect third ground speed signals are detected and located, and
- during a fourteenth step, a measurement and a state of integrity of a fourth ground speed signal of said aircraft (2) are determined and provided, on the basis of at least one second ground speed signal of integrity and/or at least two third ground speed signals of integrity and excluding, if necessary, said incorrect second and/or third ground speed signals.

EP 3 230 767 B1

**Fig.1**

**Fig.2**

20

**Fig.3**

**Fig.4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7436354 B
- FR 2906893
- FR 2964468
- US 2011060483 A
- FR 2996647
- FR 2971857
- US 4264955 A
- FR 2964199

**Littérature non-brevet citée dans la description**

- A New Failure Détection Approach and Its Application to GPS Autonomous Integrity Monitoring. *IEEE Transactions on Aerospace and Electronic Systems,* Janvier 1995, vol. 31 (1), 499-506